Europäisches Patentamt

European Patent Office

Office européen des brevets

(11) Publication number: **0 456 973 A2**

# EUROPEAN PATENT APPLICATION

(21) Application number: 91102981.7

(51) Int. Cl.5: **H04J  3/06**

(22) Date of filing: 28.02.91

(30) Priority: 12.05.90 GB 9010711

(43) Date of publication of application:
**21.11.91 Bulletin  91/47**

(84) Designated Contracting States:
**DE FR GB**

(71) Applicant: **STORNO A/S**
**Artillerivej 126**
**DK-2300 Copenhagen S(DK)**

(72) Inventor: **Jensen, Robert**
**Syvhujvoenge 91**
**DK-Vallensbek 2625(DK)**

(74) Representative: **Dunlop, Hugh Christopher et**
**al**
**Motorola European Intellectual Property**
**Operations Jays Close Viables Industrial**
**Estate**
**Basingstoke, Hampshire RG22 4PD(GB)**

(54) **Synchronisation apparatus.**

(57) This invention relates to apparatus for detecting a synchronisation sequence of data bits in a bit stream, where the sequence forms part of a cyclical linear feed back sequence. The apparatus may, for example, be used for frame synchronisation. It comprises: a first linear feedback circuit (11) for predicting the next received data bit and checking whether it is predicted correctly, a second linear feedback circuit (14) for generating the same second sequence, and thereby also predicting the next received data bit; means (13, 16) for setting the second circuit to the same position in the sequence as the first circuit when a first predetermined number of bits (N) has been received as predicted by the first circuit, and periodically thereafter when a new bit is received as predicted by the first circuit; means (18) for determining when a second predetermined number (M) of bits has been received as predicted by the second circuit, and means (16) for ceasing setting of the second circuit at that time, whereby the second circuit is locked to continue generating the sequence of bits to which it is set.

*FIGURE*

## Background of the Invention

This invention relates to apparatus for detecting a synchronisation sequence of data bits in a bit stream, where the sequence forms part of a cyclical linear feed back sequence. The apparatus may, for example, be used for frame synchronisation.

## Summary of the Prior Art

In the field of bit error analysers, the Hewlett Packard 1645A bit error analyser provides a feed forward shift register and a feed back shift register for analysing a linear feed back sequence for the purposes of bit error rate measurements. The output of the feed forward register is compared with received data in an Exclusive OR gate. If an error is present in the received data, the data will be different from the feed forward data, providing a feed forward error signal. The feed back register is parallel loaded from the feed forward register when a clock slip is detected. This results in automatic synchronization of the feed back register with the incoming data. The feed back register taps are combined through an Exclusive OR gate and fed back to the beginning of the shift register. The feed back register output is compared with the received data and the resulting comparison provides a feed back error signal.

Synchronization in a bit error analyser is a continous process used for the purposes of error measurements.

It is an object of the present invention to provide synchronization to a bit stream in spite of the existence of errors in the synchronization sequence.

## Summary of the Invention

According to the present invention, there is provided apparatus for detecting a first synchronization sequence of data bits in a bit stream, where the sequence forms part of a second cyclical linear feed back sequence, the apparatus comprising: a first linear feed back circuit for predicting the next received data bit and checking whether it is predicted correctly, a second linear feed back circuit for generating the same second sequence and thereby also predicting the next received data bit; means for setting the second circuit to the same position in the sequence as the first circuit when a predetermined number of bits (N) has been received as predicted by the first circuit, and periodically thereafter when a new bit is received as predicted by the first circuit; means for determining when a second predetermined number (M) of bits has been received as predicted by the second circuit, and means for ceasing setting of the second circuit at that time, whereby the second circuit is locked to continue generating the sequence of bits to which it is set.

It is particularly preferred that means are provided for detecting a predetermined third sequence of bits within the first sequence, after the second sequence has been locked. The third sequence may be used for frame synchronization.

The synchronization of two bit streams and the use of the last bits in the sequence as a frame synchronization signal is in particular a feature not found in the prior art.

## Brief Description of the Drawing

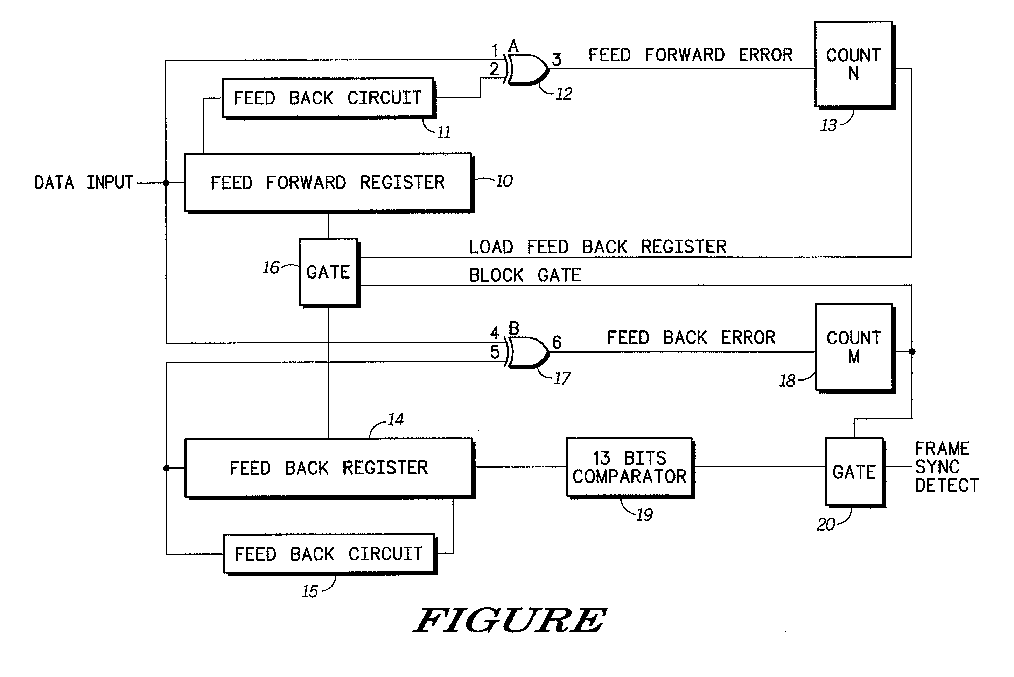

Fig 1 shows a circuit diagram of apparatus in accordance with the preferred embodiment of the invention.

## Detailed Description of the Preferred Embodiment

The purpose of the invention is to detect the beginning of a data telegram (frame synchronization) This is usually done by detecting a certain sequence of bits. The sequence must have a certain length, e.g. 32 bits, in order to avoid falsing, but when the sequence is made longer the probability of detecting the sequence will be smaller, unless the signal is completely free from errors. In this invention the sequence can be made as long as one may wish, and the probability of detecting frame synchronization will increase with the length instead of decrease. Falsing will be independent of the length.

The circuit shown in Figure 1 shows a feed forward register 10 with an associated feed back circuit 11 for predicting the next bit of the linear feed back sequence. An Exclusive OR gate 12 is provided for comparing the data input with the results of the feed back circuit 11. A first counter 13 counts the 'zeros' from the gate 12. A feed back register 14 is provided with a feed back circuit 15 similar to feed back circuit 11. A gate 16 is connected between the feed forward register 10 and the feed back register 14 for parallel loading the contents of the feed forward register 10 into the feed back register 14. A second Exclusive OR gate 17 compares the results of the feed back circuit 15, which predicts the next bit of the linear feed back sequence, with the data input. A second count circuit 18 counts the 'zeros' from the Exclusive OR gate 17. The parallel load gate 16 is under the control of the counters 13 and 18. A 13-bit comparator 19 receives and compares the output from the feed back register 14 and searches for a predetermined sequence of bits. When the predetermined sequence is detected, a frame synchronization detect signal is provided by the comparator 19. A gate 20 is provided under the control of the counter 18 for blocking the detector signal from the comparator 19.

The function of the circuit is as follows.

The sequence is generated in the transmitter by a LFSR (Linear Feed Back Shift Register) with length 13 bits. The repetition length is 8191 bits ($2^{13-1}$) but other feed back circuits with a longer sequence can be used, and the sequence can be shortened by loading an appropriate word into the register before it is started. In this example 13 bits are sufficient to define the position in the sequence, because all combinations of 13 bits are generated, except all zeros.

In the receiver are two LFSRs, one with the feed back circuit unconnected (this is the feed forward register 10) and one with the feed back connected to the input (this is the feed back register 14). The output from each register is compared with the incoming datastream, and the number of correct bits counted.

If the input data are random, 50% in average will be correct, but if the data contain the preamble sequence, the feed forward register comparator will always be correct, unless the received data contain bit errors. The feed back comparator 12 will show correct bits if the generated sequence is synchroneous with the received sequence, and the received sequence is free from errors, otherwise only 50% in average will be correct.

A certain number (N) of consecutive correct bits are counted from the feed forward comparator 12 and when a terminal count is generated, the content of the feed forward register is downloaded to the feed back register. If it was in fact the correct sequence which was found the feed back is now synchronized with the transmitter sequence, and the last 13 bits in the sequence can be detected free from errors by comparator 19, and the frame synchronization timing found.

The number of bits (N) counted in the feed forward comparator is chosen fairly low, in order to get a large number of possible synchronizations, but not large enough to avoid falsing. Therefore correct bits from the feed back comparator are also counted, and synchronization is not accepted unless a larger number of correct bits are counted. The performance of the invention depends very much on these two figures. A figure of 9 to 10 correct bits from the feed forward register will give a maximum number of correct synchronizations. Also the number of false synchronizations will increase, but with a sufficient long sequence the feed back register will have enough time to cancel these. A figure of 22 correct bits (M) from the feed back comparator has been found to give a suitable compromise between falsing and probability of receiving frame synchronization in a noisy signal. If falsing is critical a higher figure can be chosen without affecting the synchronization too much. N and M could, for example lie in the ranges 8 to 16 and 18 to 32 respectively.

In counting N and M, errors may be allowed, for example a predetermined number of errors per N or M counts.

Allowing errors may improve the probability of synchronization, but in order to keep the falsing on the same level, N and M would have to be increased, N could for example lay in the range 12 to 16 with 1 or 2 errors, and M in the range 24 to 32 with 1 to 4 errors.

**Claims**

1. Apparatus for detecting a first synchronisation sequence of data bits in a bit stream, where the sequence forms part of a second cyclical linear feedback sequence, the apparatus comprising:

   a first linear feedback circuit for predicting the next received data bit and checking whether it is predicted correctly,

   a second linear feedback circuit for generating the same second sequence, and thereby also predicting the next received data bit;

   means for setting the second circuit to the same position in the sequence as the first circuit when a first predetermined number of bits (N) has been received as predicted by the first circuit, and periodically thereafter when a new bit is received as predicted by the first circuit;

   means for determining when a second predetermined number (M) of bits has been received as predicted by the second circuit, and means for ceasing setting of the second circuit at that time, whereby the second circuit is locked to continue generating the sequence of bits to which it is set.

2. Apparatus according to claim 1 further comprising means for detecting a predetermined third sequence of bits within the first sequence, after the second circuit has been locked.

3. Apparatus according to claim 2 further comprising means for dividing the bit stream into frames dependent on the means for detecting the third sequence of bits.

4. Apparatus according to any one of the preceding claims wherein the first predetermined number is in the range 8 to 16.

5. Apparatus according to any one of the preceding claims, wherein the second predetermined number is in the range 18 to 32.

6. Apparatus according to any one of the preceding claims comprising means for counting the first predetermined number of bits and allowing 1 to 2 errors in said count.

7. Apparatus according to any one of the preceding claims comprising means for counting the second predetermined number of bits and allowing 1 to 4 errors in said count.

FIGURE

EP 0 456 973 A2